# EUROPEAN PATENT APPLICATION

(11) **EP 4 827 102 A1**
(43) Date of publication of application: **21.10.2026**
(21) Application number: 24915486.5
(22) Date of filing: 18.12.2024
(51) Int. Cl.: H04N 23/67, H04N 23/63, H04N 23/62

(54) **ELECTRONIC DEVICE PERFORMING AUTO-FOCUS USING PHASE-DIFFERENCE DETECTION SCHEME, AND OPERATION METHOD THEREOF**

(30) Priority: 02.01.2024 KR 20240000158; 26.01.2024 KR 20240012474
(71) Applicant: Samsung Electronics Co., Ltd., Suwon-si, Gyeonggi-do 16677 (KR)
(72) Inventor: LEE, Heungki, Suwon-si Gyeonggi-do 16677 (KR); LEE, Joonsub, Suwon-si Gyeonggi-do 16677 (KR); KIM, Ildo, Suwon-si Gyeonggi-do 16677 (KR); LEE, Kangmin, Suwon-si Gyeonggi-do 16677 (KR); LEE, Seungho, Suwon-si Gyeonggi-do 16677 (KR)
(74) Representative: HGF
(86) International application number: PCT/KR2024/097125
(87) International publication number: WO 2025/147076

(57) **Abstract**

An electronic device according to an embodiment may include a camera module including an image sensor, a processor, and a memory for storing at least one instruction executable by the processor. The at least one instruction according to an embodiment may cause the electronic device to receive first phase stream data and second phase stream data from the image sensor, obtain a first image map including a plurality of blocks, generate a second image map based on allocating at least one pixel included in the first phase stream data and at least one pixel included in the second phase stream data to the plurality of blocks respectively, set a region of interest in the second image map, select any one of the first phase stream data or the second phase stream data based on pixel-by-pixel information included in the region of interest, and perform autofocus based on the selected phase stream data.

## Description

### [Technical Field]

The disclosure relates to an electronic device for performing phase detection auto focus and an operating method thereof.

### [Background Art]

Phase detection auto focus (PDAF) is a technology used to accurately focus on a subject. A smartphone may use the PDAF to rapidly determine a direction and an amount of lens movement required to focus on a subject which is moving fast.

If light passes through a lens, it is split into two rays, and the two rays reach a pair of phase detection pixels included in an image sensor, respectively. The image sensor may compare phases of the light reaching the respective phase-detecting pixel and identify whether an image is in focus. If the phases of the two rays match, the image is in focus, and if there is a phase difference between the two rays, the image is out of focus.

An electronic device may calculate how much to adjust the lens to focus the image based on phase difference information. The phase difference information may drive an auto focus mechanism, and may be used to adjust the lens position until the image becomes sharp.

The pair of phase detection pixels mentioned above generates a pair of PD streams, and the PD streams include phase stream data having relatively long saturation and phase stream data having relatively small saturation. At this time, there are a scheme of taking only one of the two data for the autofocus (a drop scheme), a scheme of processing the two data simultaneously (a multiprocessing scheme), and a scheme of merging and processing the two data (a merging scheme), but the drop scheme lacks data for the autofocus, the multiprocessing scheme increases power consumption, and the merging scheme requires a separate sensor and is limited in computation time.

### [Disclosure of Invention]

### [Solution to Problem]

An electronic device according to an embodiment may include a processor and a memory for storing at least one instruction executable by the processor. The at least one instruction causes the electronic device to receive first phase stream data and second phase stream data from the image sensor, obtain a first image map including a plurality of blocks, generate a second image map based on allocating at least one pixel included in the first phase stream data and at least one pixel included in the second phase stream data to the plurality of blocks respectively, set a region of interest in the second image map, select any one of the first phase stream data or the second phase stream data based on pixel-by-pixel information included in the region of interest, and perform autofocus based on the selected phase stream data.

An operating method of an electronic device according to an embodiment may include receiving first phase stream data and second phase stream data from an image sensor, obtaining a first image map including a plurality of blocks, generating a second image map based on allocating at least one pixel included in the first phase stream data and at least one pixel included in the second phase stream data to the plurality of blocks respectively, setting a region of interest in the second image map, selecting any one of the first phase stream data or the second phase stream data based on pixel-by-pixel information included in the region of interest, and performing autofocus based on the selected phase stream data.

A recording medium according to an embodiment may be a non-transitory computer-readable recording medium for storing instructions, when executed by at least one processor, causing the at least one processor to perform operations. The operations may include receiving first phase stream data and second phase stream data from an image sensor, obtaining a first image map including a plurality of blocks, generating a second image map based on allocating at least one pixel included in the first phase stream data and at least one pixel included in the second phase stream data to the plurality of blocks respectively, setting a region of interest in the second image map, selecting any one of the first phase stream data or the second phase stream data based on pixel-by-pixel information included in the region of interest, and performing autofocus based on the selected phase stream data.

### [Brief Description of Drawings]

FIG. 1 is a block diagram illustrating an electronic device in a network environment 100 according to various embodiments.
FIG. 2 is a block diagram illustrating a camera module according to various embodiments.
FIG. 3 illustrates a transmission path of phase stream data according to an embodiment.
FIG. 4 illustrates a transmission scheme of phase stream data according to an embodiment.
FIG. 5 is a control block diagram of a phase stream data preprocessing module according to an embodiment.
FIG. 6 is a flowchart illustrating a region of interest (ROI) finalization process of an electronic device according to an embodiment.
FIG. 7 is a flowchart illustrating a phase stream data preprocessing process of an electronic device according to an embodiment.
FIG. 8 is a flowchart illustrating a phase stream data selection process of an electronic device according to an embodiment.
FIG. 9 illustrates an illuminance image map (or a sharpness image map) according to an embodiment.
FIG. 10 illustrates a result of selecting first phase stream data among a plurality of phase stream data.
FIG. 11 illustrates a result of selecting second phase stream data among a plurality of phase stream data.

### [Mode for the Invention]

Hereinafter, preferred embodiments of the present invention will be described in detail with reference to the accompanying drawings. Advantages and features of the present invention, and methods for achieving them will become clear upon reference to the embodiments described in detail below with reference to the accompanying drawings. However, the present invention is not limited to the embodiments disclosed herein, but may be embodied in various different forms, these embodiments are provided merely to make the disclosure of the present invention complete and to fully inform those skilled in the art to which the present invention pertains of the scope of the invention, and the present invention is defined solely by the scope of the claims. Throughout the specification, the same reference numerals indicate the same components.

Unless otherwise defined, all terms used in this specification (including technical and scientific terms) may be used in the meanings commonly understood by those skilled in the art to which the present invention pertains. Also, terms defined in commonly used dictionaries are not interpreted ideally or excessively unless explicitly defined otherwise. The terms used in this specification are for illustrating embodiments and are not intended to limit the present invention. In this specification, the singular form includes the plural form unless the context specifically mentions otherwise.

"Comprises" and/or "comprising," as used in the specification do not exclude presence or addition of one or more other components, steps, operations and/or elements thereof.

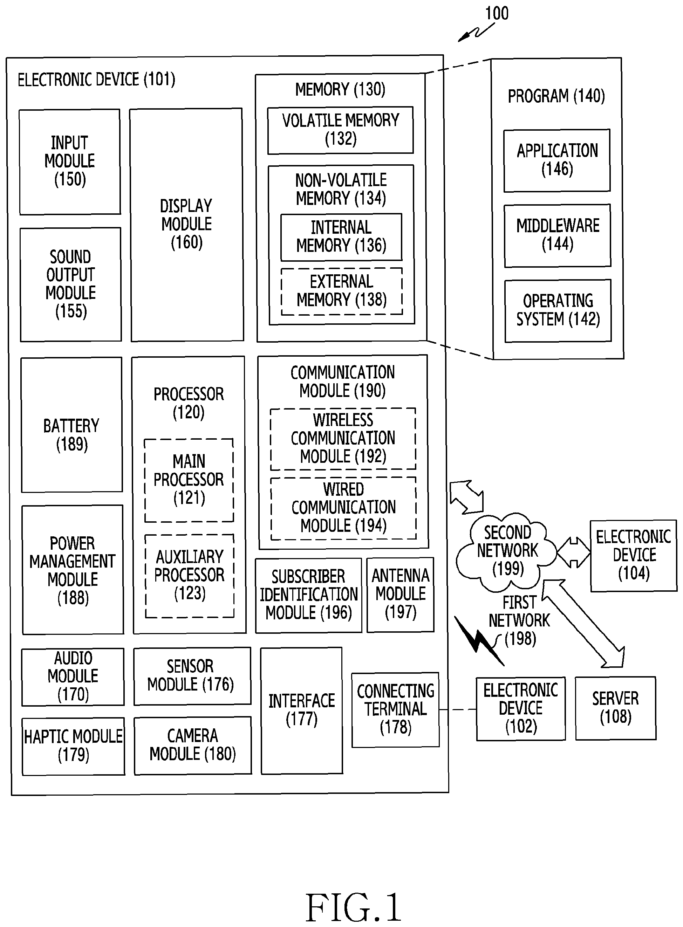

Fig. 1 is a block diagram illustrating an electronic device 101 in a network environment 100 according to various embodiments. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," **"coupled to," "connected with,"** or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

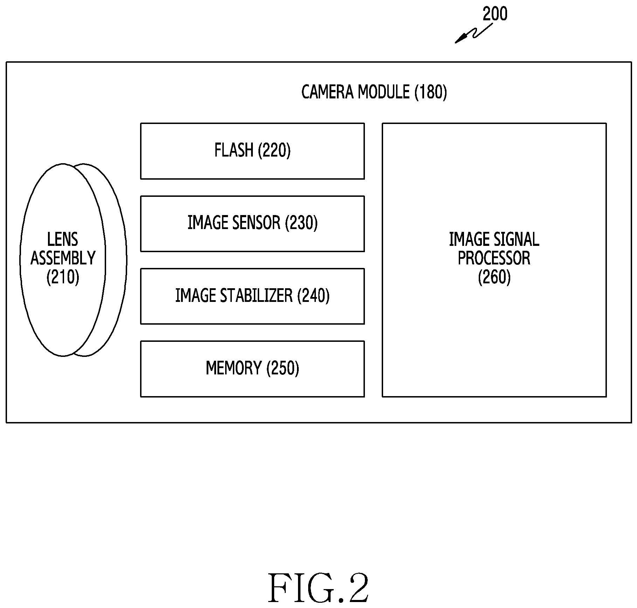

Fig. 2 is a block diagram 200 illustrating the camera module 180 according to various embodiments. Referring to Fig. 2, the camera module 180 may include a lens assembly 210, a flash 220, an image sensor 230, an image stabilizer 240, memory 250 (e.g., buffer memory), or an image signal processor 260. The lens assembly 210 may collect light emitted or reflected from an object whose image is to be taken. The lens assembly 210 may include one or more lenses. According to an embodiment, the camera module 180 may include a plurality of lens assemblies 210. In such a case, the camera module 180 may form, for example, a dual camera, a 360-degree camera, or a spherical camera. Some of the plurality of lens assemblies 210 may have the same lens attribute (e.g., view angle, focal length, auto-focusing, f number, or optical zoom), or at least one lens assembly may have one or more lens attributes different from those of another lens assembly. The lens assembly 210 may include, for example, a wide-angle lens or a telephoto lens.

The flash 220 may emit light that is used to reinforce light reflected from an object. According to an embodiment, the flash 220 may include one or more light emitting diodes (LEDs) (e.g., a red-green-blue (RGB) LED, a white LED, an infrared (IR) LED, or an ultraviolet (UV) LED) or a xenon lamp. The image sensor 230 may obtain an image corresponding to an object by converting light emitted or reflected from the object and transmitted via the lens assembly 210 into an electrical signal. According to an embodiment, the image sensor 230 may include one selected from image sensors having different attributes, such as a RGB sensor, a black-and-white (BW) sensor, an IR sensor, or a UV sensor, a plurality of image sensors having the same attribute, or a plurality of image sensors having different attributes. Each image sensor included in the image sensor 230 may be implemented using, for example, a charged coupled device (CCD) sensor or a complementary metal oxide semiconductor (CMOS) sensor.

The image stabilizer 240 may move the image sensor 230 or at least one lens included in the lens assembly 210 in a particular direction, or control an operational attribute (e.g., adjust the read-out timing) of the image sensor 230 in response to the movement of the camera module 180 or the electronic device 101 including the camera module 180. This allows compensating for at least part of a negative effect (e.g., image blurring) by the movement on an image being captured. According to an embodiment, the image stabilizer 240 may sense such a movement by the camera module 180 or the electronic device 101 using a gyro sensor (not shown) or an acceleration sensor (not shown) disposed inside or outside the camera module 180. According to an embodiment, the image stabilizer 240 may be implemented, for example, as an optical image stabilizer. The memory 250 may store, at least temporarily, at least part of an image obtained via the image sensor 230 for a subsequent image processing task. For example, if image capturing is delayed due to shutter lag or multiple images are quickly captured, a raw image obtained (e.g., a Bayer-patterned image, a high-resolution image) may be stored in the memory 250, and its corresponding copy image (e.g., a low-resolution image) may be previewed via the display module 160. Thereafter, if a specified condition is met (e.g., by a user's input or system command), at least part of the raw image stored in the memory 250 may be obtained and processed, for example, by the image signal processor 260. According to an embodiment, the memory 250 may be configured as at least part of the memory 130 or as a separate memory that is operated independently from the memory 130.

The image signal processor 260 may perform one or more image processing with respect to an image obtained via the image sensor 230 or an image stored in the memory 250. The one or more image processing may include, for example, depth map generation, three-dimensional (3D) modeling, panorama generation, feature point extraction, image synthesizing, or image compensation (e.g., noise reduction, resolution adjustment, brightness adjustment, blurring, sharpening, or softening). Additionally or alternatively, the image signal processor 260 may perform control (e.g., exposure time control or read-out timing control) with respect to at least one (e.g., the image sensor 230) of the components included in the camera module 180. An image processed by the image signal processor 260 may be stored back in the memory 250 for further processing, or may be provided to an external component (e.g., the memory 130, the display module 160, the electronic device 102, the electronic device 104, or the server 108) outside the camera module 180. According to an embodiment, the image signal processor 260 may be configured as at least part of the processor 120, or as a separate processor that is operated independently from the processor 120. If the image signal processor 260 is configured as a separate processor from the processor 120, at least one image processed by the image signal processor 260 may be displayed, by the processor 120, via the display module 160 as it is or after being further processed.

According to an embodiment, the electronic device 101 may include a plurality of camera modules 180 having different attributes or functions. In such a case, at least one of the plurality of camera modules 180 may form, for example, a wide-angle camera and at least another of the plurality of camera modules 180 may form a telephoto camera. Similarly, at least one of the plurality of camera modules 180 may form, for example, a front camera and at least another of the plurality of camera modules 180 may form a rear camera.

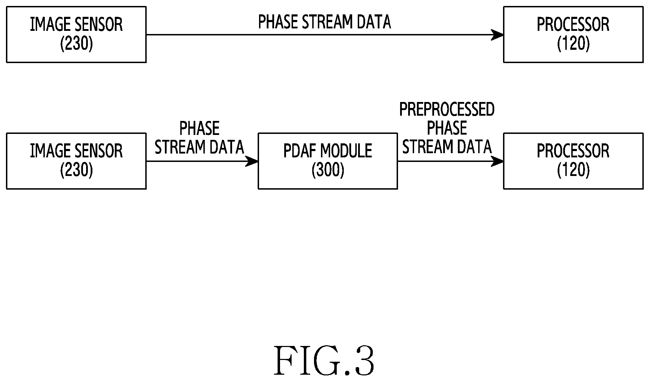

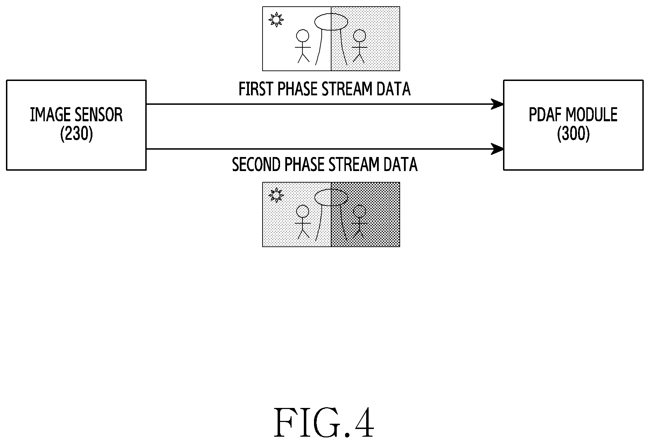

FIG. 3 illustrates a transmission path of phase stream data according to an embodiment, and FIG. 4 illustrates a transmission scheme of phase stream data according to an embodiment.

First, the phase stream data is data generated at the image sensor 230 and includes an image in a pair. The image sensor 230 may include a plurality of unit pixels (not shown). According to an embodiment, the unit pixel may include a first photodiode (PD), a second PD, a third PD, and a fourth PD. The first PD, the second PD, the third PD, and the fourth PD may have a 2x2 array. The unit pixel is an example, and the disclosure may be applied to various unit pixels including a structure in which a phase difference of light incident on the PDs is separated. An electronic device according to the disclosure performs an auto focus (AF) function by classifying AF data outputted from each PD into first data (e.g., left data) and second data (e.g., right data) and focusing using the phase difference between the two.

The image sensor 230 according to an embodiment may classify the AF data outputted from each PD into first phase stream data and second phase stream data. The first phase stream data corresponds to a stream having longer saturation than the second phase stream data, and the second phase stream data corresponds to a stream having shorter saturation than the first phase stream data. Accordingly, a dark scene is clearly visible in an image using the first phase stream data, and a bright scene is clearly visible in an image using the second phase stream data.

The first phase stream data according to an embodiment may include a first image frame based on a first exposure time. The second phase stream data according to an embodiment may include a second image frame based on a second exposure time which is shorter than the first exposure time.

The image sensor 230 according to an embodiment may acquire phase stream data if the camera module 180 (FIG. 2) is in an active state. The active state may indicate that the camera stores an image obtained from the image sensor in a designated region of the memory 250 such as a buffer. For example, the active state may include a stream on state of storing a stream of the image obtained from the image sensor 230 in the buffer. In an embodiment, the processor 120 may display at least a part of the stream of the image as a preview image in the display module 160, and thus display to the user an image currently captured by the camera substantially in a real-time.

According to an embodiment, the image sensor 230 may generate the phase stream data, and transmit to the processor 120 the phase stream data which is a result of simultaneously processing the autofocus on the object. However, this embodiment has disadvantages in not handling various situations and not using the phase stream data in other forms.

According to an embodiment, upon generating the phase stream data which is raw data, the image sensor 230 may transmit the phase stream data to a PDAF module 300, and then transmit the preprocessed phase stream data which is the result of performing the autofocus, to the processor 120. At this time, since the PDAF module 300 processes the autofocus in software, various situations may be considered.

Meanwhile, the PDAF module 300 may divide the scene into specific parts and process them to identify which region is a region of interest (ROI) of the user. The ROI may be defined based on a user input or setting, and the PDAF module 300 may perform the autofocus using an ROI received from outside.

According to an embodiment, the PDAF module 300 may receive the first phase stream data and/or the second phase stream data to perform the autofocus.

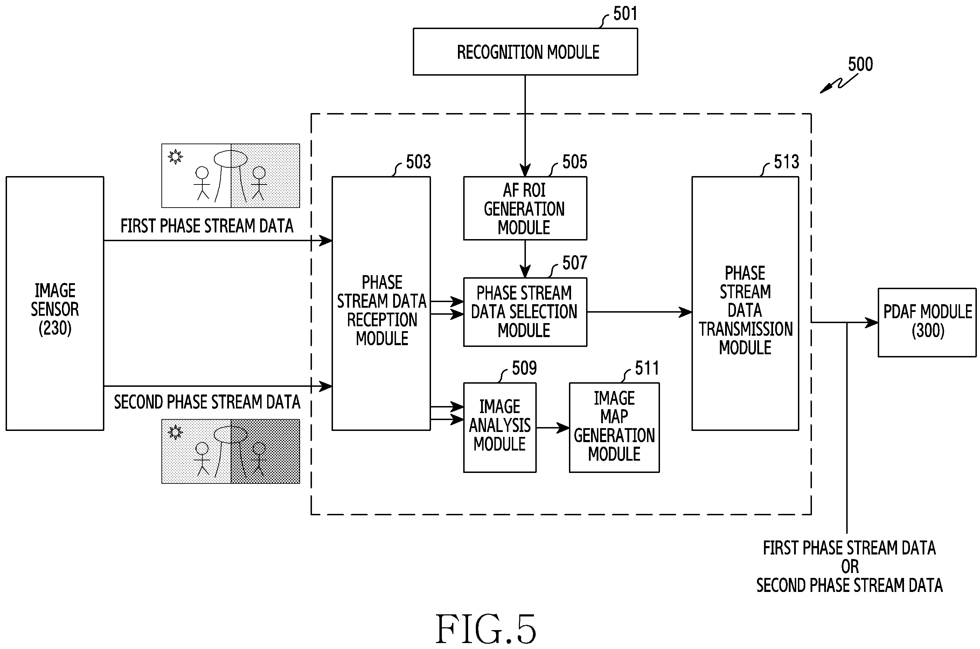

FIG. 5 is a control block diagram of a phase stream data preprocessing module according to an embodiment.

The image sensor 230 according to an embodiment acquires the phase stream data if the camera module 180 (FIG. 2) is active, and transmits the first phase stream data and the second phase stream data to a phase stream data reception module 503.

The camera module 180 according to an embodiment may acquire the first phase stream data which is a first image frame based on a first exposure time, and the second phase stream data which is a second image frame based on a second exposure time shorter than the first exposure time, in an auto exposure bracketing (AEB) mode. The AEB is a mode in which one image is captured with a long exposure time and the other is captured with a short exposure time respectively, based on an appropriate exposure time.

The camera module 180 according to an embodiment may obtain the first phase stream data which is the first image frame based on the first exposure time and the second phase stream data which is the second image frame based on the second exposure time shorter than the first exposure time in a preview mode.

The phase stream data reception module 503 according to an embodiment may store and classify the first phase stream data and the second phase stream data received from the image sensor 230, and forward the first phase stream data and the second phase stream data to a phase stream data selection module 507 and/or an image analysis module 509.

An AF ROI generation module 505 according to an embodiment may generate AF data based on context information obtained from a recognition module 501. The recognition module 501 according to an embodiment may perform face recognition, animal recognition, text recognition, and scene recognition through image processing on the image and provide the context information to the AF ROI generation module 505. In addition, the recognition module 501 according to an embodiment may provide an ROI designated through a user input to the AF ROI generation module 505. The AF ROI generation module 505 may set a ROI through the context information and/or the user input, and generate the AF data to perform the autofocus based on the ROI.

The image analysis module 509 according to an embodiment may obtain phase information and illuminance information from the image sensor 230. The image analysis module 509 provides necessary information for an image map generation module 511 to generate an image map. The image map generation module 511 according to an embodiment generates an image map based on the obtained information. The image map generation module 511 according to an embodiment determines phase stream data having dominant phase information within the ROI which is set in the image map based on the information received from the image analysis module 509. In the image map generated by the image map generation module 511, at least one pixel (a first pixel) included in the first phase stream data and at least one pixel (a second pixel) included in the second phase stream data are allocated to a plurality of blocks respectively. At this time, the plurality of blocks forming the image map may include a first pixel group and a second pixel group. The image map generation module 511 may identify the number of first pixels of the first phase stream data and the number of second pixels of the second phase stream data, included in the ROI.

Meanwhile, the electronic device 101 according to an embodiment may obtain the illuminance information from an illuminance sensor (not shown) separately provided, in addition to obtaining the illuminance information from the image sensor 230. The electronic device 101 according to an embodiment may obtain the illuminance information from at least one of the illuminance sensor or the image sensor provided on one surface (a front surface or a rear surface) of the electronic device to perform an automatic brightness operation of the display. For example, the image analysis module 509 may cause the image map generation module 511 to generate the image map based on values sensed by at least one illuminance sensor or at least one image sensor.

The phase stream data selection module 507 may finally select the dominant phase stream data based on the number of pixels identified by the image map generation module 511. For example, the phase stream data selection module 507 may finally select the first phase stream data to perform the autofocus based on the first phase stream data if the number of the first pixels in the ROI is greater than the number of the second pixels. By contrast, the phase stream data selection module 507 may finally select the second phase stream data to perform the autofocus based on the second phase stream data if the number of the second pixels in the ROI is less than the number of the first pixels.

The phase stream data transmission module 513 may transmit the selected phase stream data to the PDAF module 300, and the PDAF module 300 may obtain AF data based on the selected phase stream data.

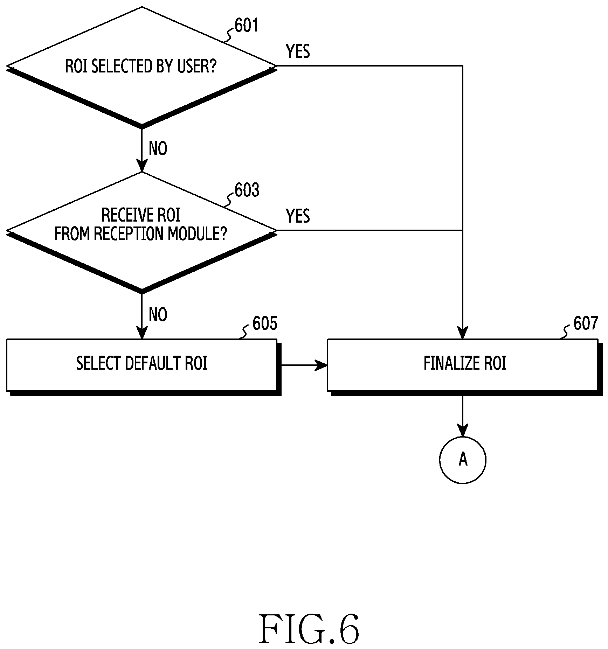

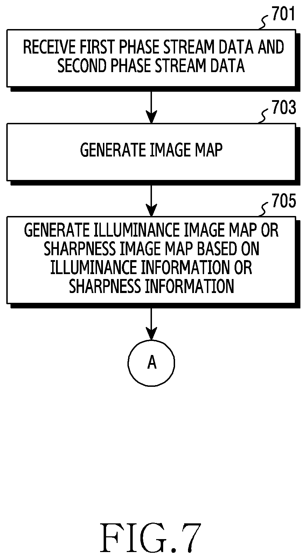

In summary, the electronic device 101 according to an embodiment may generate a new image map by combining pixels constituting the first phase stream data and the second phase stream data into one image map, determine which phase stream data has dominant pixels in the ROI set in the new image map, and thus determine the phase stream data advantageous for performing the autofocus. That is, the process of finalizing the ROI and the preprocessing process of selecting one of the plurality of phase stream data are processed in parallel. This shall be described in more detail with reference to FIG. 6 and FIG. 7.

FIG. 6 is a flowchart illustrating an ROI finalization process of an electronic device according to an embodiment.

Operations according to FIG. 6 correspond to operations of the image sensor 230 for acquiring phase stream data and currently determining an ROI for an image frame.

In an embodiment, if identifying a ROI selected by the user (YES in operation 601), the electronic device 101 determines the ROI for the phase stream data in operation 607.

According to an embodiment, if identifying no ROI selected by the user (NO in operation 601), the electronic device 101 identifies whether there is a ROI received from the recognition module in operation 603.

The recognition module according to an embodiment may perform face recognition, animal recognition, text recognition, and scene recognition through image processing on the image and provide basic data for setting an ROI.

According to an embodiment, if identifying an ROI received from the recognition module (YES in operation 603), the electronic device 101 finalizes the ROI for the phase stream data in operation 607.

According to an embodiment, if identifying no ROI received from the recognition module (NO in operation 603), the electronic device 101 selects a default ROI in operation 605 and finalizes the ROI for the phase stream data in operation 607.

FIG. 7 is a flowchart illustrating a phase stream data preprocessing process of an electronic device according to an embodiment.

According to an embodiment, the electronic device 101 may receive the first phase stream data and the second phase stream data from the image sensor 230 in operation 701.

The first phase stream data according to an embodiment may include the first image frame based on the first exposure time. The second phase stream data according to an embodiment may include the second image frame based on the second exposure time which is shorter than the first exposure time.

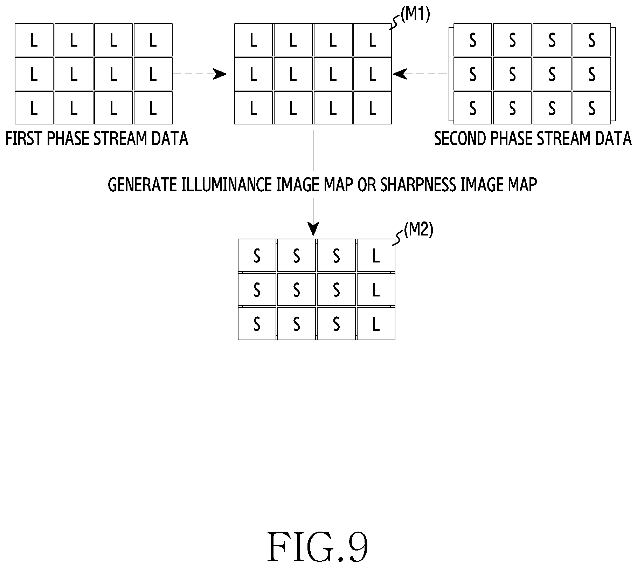

According to an embodiment, the electronic device 101 generates an image map in operation 703. In this operation, the image map refers to M1 of FIG. 9. The image map indicates an NxM block set for allocating a plurality of pixels, if the phase stream data is implemented as an image frame. The image map may be allocated pixel data acquired based on a relatively long exposure time included in the first phase stream data and pixel data acquired based on a relatively short exposure time included in the second phase stream data.

According to an embodiment, the electronic device 101 may generate an illuminance image map or a sharpness image map based on illuminance information or sharpness information in operation 705.

Referring to FIG. 9, the first image map M1 includes a plurality of blocks, and indicates the NxM block set for allocating the plurality of pixels. A second image map M2 may be implemented by allocating a plurality of first pixels (4 pixels in FIG. 9) included in the first phase stream data and a plurality of second pixels (9 pixels in FIG. 9) included in the second phase stream data to the first image map M1 in each of the plurality of blocks. Although FIG. 9 has been described based on the 3x4 image map, which is merely an example, and it is noted that it may be implemented with a greater number of block sets.

In an embodiment, the electronic device 101 may generate the illuminance image map based on the illuminance information. The electronic device 101 may configure the illuminance image map by combining a first pixel group which is a part of the plurality of pixels included in the first phase stream data based on the illuminance information acquired from the image sensor, and a second pixel group which is a part of the plurality of pixels included in the second phase stream data based on the illuminance information acquired from the image sensor. The illuminance image map configured as such may be implemented as a whole scene by combining scene parts which are well visible in each phase stream.

In an embodiment, the electronic device 101 may generate the sharpness image map based on the sharpness information. The electronic device 101 may configure the sharpness image map by combining the first pixel group which is a part of the plurality of pixels included in the first phase stream data based on the sharpness information acquired through filtering, and the second pixel group which is a part of the plurality of pixels included in the second phase stream data based on the sharpness information acquired through filtering.

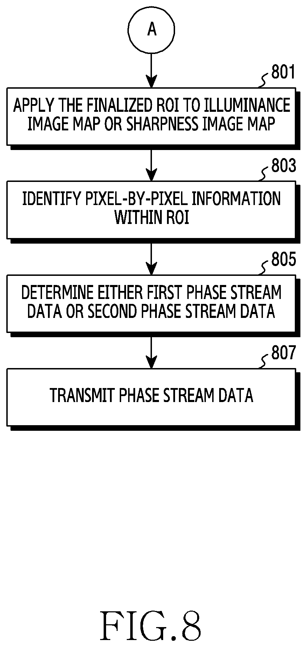

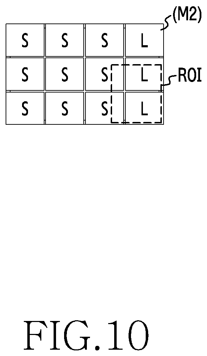

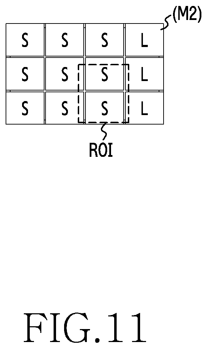

FIG. 8 is a flowchart illustrating a phase stream data selection process of an electronic device according to an embodiment. FIG. 10 illustrates a result of selecting first phase stream data among a plurality of phase stream data, and FIG. 11 illustrates a result of selecting second phase stream data among a plurality of phase stream data.

The electronic device 101 according to an embodiment applies the finalized ROI to the illuminance image map or the sharpness image map in operation 801. The ROI corresponds to the ROI finalized by a user input or automatic setting through the process according to FIG. 6.

The electronic device 101 according to an embodiment identifies pixel-by-pixel information within the ROI in operation 803.

Referring to FIG. 10, in an ROI set in a second image map M2, a pixel L of first phase stream data is superior to a pixel S of second phase stream data. In this case, the electronic device 101 determines the first phase stream data among the first phase stream data or the second phase stream data, and performs the autofocus based on the first phase stream data.

Referring to FIG. 11, in an ROI set in a second image map M2, a pixel S of second phase stream data is superior to a pixel L of first phase stream data. In this case, the electronic device 101 determines the second phase stream data among the first phase stream data or the second phase stream data, and performs the autofocus based on the second phase stream data.

The electronic device 101 according to an embodiment determines either the first phase stream data or the second phase stream data in operation 805. Herein, the determined phase stream data may be transmitted to the PDAF module 300 and used to perform the autofocus.

For example, referring back to FIG. 4, one person, who is on a side of the sun which is a light source, is subject to saturation, and the other person, who is on a side of the shade, is subject to darkening. Hence, if capturing the person near the light source, it is advantageous for the autofocus based on the second phase stream data which has a relatively short saturation time. By contrast, if capturing the person on the shade side, it is advantageous for the autofocus based on the first phase stream data having less darkening and a relatively long exposure time.

An electronic device according to an embodiment may include a camera module including an image sensor, a processor, and a memory for storing at least one instruction executable by the processor. The at least one instruction may cause the electronic device to receive first phase stream data and second phase stream data from the image sensor, obtain a first image map including a plurality of blocks, generate a second image map based on allocating at least one pixel included in the first phase stream data and at least one pixel included in the second phase stream data to the plurality of blocks respectively, set a region of interest in the second image map, select any one of the first phase stream data or the second phase stream data based on pixel-by-pixel information included in the region of interest, and perform autofocus based on the selected phase stream data.

The first phase stream data according to an embodiment may include a first image frame based on a first exposure time. The second phase stream data according to an embodiment may include a second image frame based on a second exposure time which is shorter than the first exposure time.

The at least one instruction according to an embodiment may simultaneously acquire the first image frame and the second image frame in a preview mode.

The at least one instruction according to an embodiment may select a first pixel group which is a part of a plurality of pixels included in the first phase stream data, based on illumination information obtained from the image sensor, select a second pixel group which is a part of a plurality of pixels included in the second phase stream data, based on the illumination information obtained from the image sensor, and generate the second image map including the first pixel group and the second pixel group.

The at least one instruction according to an embodiment may obtain sharpness information from the first phase stream data and the second phase stream data, select a first pixel group which is a part of a plurality of pixels included in the first phase stream data, based on the sharpness information, select a second pixel group which is a part of a plurality of pixels included in the second phase stream data, based on the sharpness information, and generate the second image map including the first pixel group and the second pixel group.

The at least one instruction according to an embodiment may finalize the region of interest for the second image map based on a user input or automatic settings.

The at least one instruction according to an embodiment may identify the number of first pixels of the first phase stream data and the number of second pixels of the second phase stream data, included in the region of interest, and select any one of the first phase stream data or the second phase stream data based on comparison between the number of the first pixels and the number of the second pixels.

An operating method of an electronic device according to an embodiment may include receiving first phase stream data and second phase stream data from an image sensor, obtaining a first image map including a plurality of blocks, generating a second image map based on allocating at least one pixel included in the first phase stream data and at least one pixel included in the second phase stream data to the plurality of blocks respectively, setting a region of interest in the second image map, selecting any one of the first phase stream data or the second phase stream data based on pixel-by-pixel information included in the region of interest, and performing autofocus based on the selected phase stream data.

The first phase stream data according to an embodiment may include a first image frame based on a first exposure time. The second phase stream data according to an embodiment may include a second image frame based on a second exposure time which is shorter than the first exposure time.

Receiving the first phase stream data and the second phase stream data from the image sensor according to an embodiment may include simultaneously acquiring the first image frame and the second image frame in a preview mode.

The operating method of the electronic device according to an embodiment may include selecting a first pixel group which is a part of a plurality of pixels included in the first phase stream data, based on illumination information obtained from the image sensor, selecting a second pixel group which is a part of a plurality of pixels included in the second phase stream data, based on the illumination information obtained from the image sensor, and generating the second image map including the first pixel group and the second pixel group.

The operating method of the electronic device according to an embodiment may include obtaining sharpness information from the first phase stream data and the second phase stream data, selecting a first pixel group which is a part of a plurality of pixels included in the first phase stream data, based on the sharpness information, selecting a second pixel group which is a part of a plurality of pixels included in the second phase stream data, based on the sharpness information, and generating the second image map including the first pixel group and the second pixel group.

The operating method of the electronic device according to an embodiment may further include finalizing the region of interest for the second image map based on a user input or automatic settings.

The operating method of the electronic device according to an embodiment may further include identifying the number of first pixels of the first phase stream data and the number of second pixels of the second phase stream data, included in the region of interest, and selecting any one of the first phase stream data or the second phase stream data based on comparison between the number of the first pixels and the number of the second pixels.

A recording medium according to an embodiment may be a non-transitory computer-readable recording medium for storing instructions, when executed by at least one processor, causing the at least one processor to perform operations. The operations may include receiving first phase stream data and second phase stream data from an image sensor, obtaining a first image map including a plurality of blocks, generating a second image map based on allocating at least one pixel included in the first phase stream data and at least one pixel included in the second phase stream data to the plurality of blocks respectively, setting a region of interest in the second image map, selecting any one of the first phase stream data or the second phase stream data based on pixel-by-pixel information included in the region of interest, and performing autofocus based on the selected phase stream data.

## Claims

1. An electronic device comprising:
a camera module comprising an image sensor;
a processor; and
a memory for storing at least one instruction executable by the processor,
wherein the at least one instruction causes the electronic device to:
receive first phase stream data and second phase stream data from the image sensor,
obtain a first image map comprising a plurality of blocks,
generate a second image map based on allocating at least one pixel included in the first phase stream data and at least one pixel included in the second phase stream data to the plurality of blocks respectively,
set a region of interest in the second image map,
select any one of the first phase stream data or the second phase stream data based on pixel-by-pixel information included in the region of interest, and
perform autofocus based on the selected phase stream data.

2. The electronic device of claim 1, wherein the first phase stream data comprises a first image frame based on a first exposure time, and
the second phase stream data comprises a second image frame based on a second exposure time which is shorter than the first exposure time.

3. The electronic device of claim 2, wherein the at least one instruction simultaneously acquires the first image frame and the second image frame in a preview mode.

4. The electronic device of claim 1, wherein the at least one instruction selects a first pixel group which is a part of a plurality of pixels included in the first phase stream data, based on illumination information obtained from the image sensor,
selects a second pixel group which is a part of a plurality of pixels included in the second phase stream data, based on the illumination information obtained from the image sensor, and
generates the second image map comprising the first pixel group and the second pixel group.

5. The electronic device of claim 1, wherein the at least one instruction obtains sharpness information from the first phase stream data and the second phase stream data,
selects a first pixel group which is a part of a plurality of pixels included in the first phase stream data, based on the sharpness information,
selects a second pixel group which is a part of a plurality of pixels included in the second phase stream data, based on the sharpness information, and
generates the second image map comprising the first pixel group and the second pixel group.

6. The electronic device of claim 4, wherein the at least one instruction finalizes the region of interest for the second image map based on a user input or automatic settings.

7. The electronic device of claim 6, wherein the at least one instruction identifies the number of first pixels of the first phase stream data and the number of second pixels of the second phase stream data, included in the region of interest, and
selects any one of the first phase stream data or the second phase stream data based on comparison between the number of the first pixels and the number of the second pixels.

8. An operating method of an electronic device comprising an image sensor, comprising:
receiving first phase stream data and second phase stream data from the image sensor;
obtaining a first image map comprising a plurality of blocks;
generating a second image map based on allocating at least one pixel included in the first phase stream data and at least one pixel included in the second phase stream data to the plurality of blocks respectively;
setting a region of interest in the second image map;
selecting any one of the first phase stream data or the second phase stream data based on pixel-by-pixel information included in the region of interest; and
performing autofocus based on the selected phase stream data.

9. The operating method of the electronic device of claim 8, wherein the first phase stream data comprises a first image frame based on a first exposure time, and
the second phase stream data comprises a second image frame based on a second exposure time which is shorter than the first exposure time.

10. The operating method of the electronic device of claim 9, wherein receiving the first phase stream data and the second phase stream data from the image sensor comprises,
simultaneously acquiring the first image frame and the second image frame in a preview mode.

11. The operating method of the electronic device of claim 8, further comprising:
selecting a first pixel group which is a part of a plurality of pixels included in the first phase stream data, based on illumination information obtained from the image sensor;
selecting a second pixel group which is a part of a plurality of pixels included in the second phase stream data, based on the illumination information obtained from the image sensor; and
generating the second image map comprising the first pixel group and the second pixel group.

12. The operating method of the electronic device of claim 8, further comprising:
obtaining sharpness information from the first phase stream data and the second phase stream data;
selecting a first pixel group which is a part of a plurality of pixels included in the first phase stream data, based on the sharpness information;
selecting a second pixel group which is a part of a plurality of pixels included in the second phase stream data, based on the sharpness information; and
generating the second image map comprising the first pixel group and the second pixel group.

13. The operating method of the electronic device of claim 11, further comprising:
finalizing the region of interest for the second image map based on a user input or automatic settings.

14. The operating method of the electronic device of claim 13, further comprising:
identifying the number of first pixels of the first phase stream data and the number of second pixels of the second phase stream data, included in the region of interest; and
selecting any one of the first phase stream data or the second phase stream data based on comparison between the number of the first pixels and the number of the second pixels.

15. A non-transitory computer-readable recording medium for storing instructions, when executed by at least one processor, causing the at least one processor to perform operations, the operations comprising,
receiving first phase stream data and second phase stream data from an image sensor,
obtaining a first image map comprising a plurality of blocks,
generating a second image map based on allocating at least one pixel included in the first phase stream data and at least one pixel included in the second phase stream data to the plurality of blocks respectively,
setting a region of interest in the second image map,
selecting any one of the first phase stream data or the second phase stream data based on pixel-by-pixel information included in the region of interest, and
performing autofocus based on the selected phase stream data.
